(19) **Europäisches Patentamt**

**European Patent Office**

**Office européen des brevets**

(11) Publication number : **0 311 346 B1**

(12) # EUROPEAN PATENT SPECIFICATION

(45) Date of publication of patent specification :
**11.03.92 Bulletin 92/11**

(51) Int. Cl.⁵ : **F16D 51/22, F16C 1/12**

(21) Application number : **88309226.4**

(22) Date of filing : **04.10.88**

(54) **Improvements in or relating to brakes.**

(30) Priority : **05.10.87 US 105389**

(43) Date of publication of application :
**12.04.89 Bulletin 89/15**

(45) Publication of the grant of the patent :
**11.03.92 Bulletin 92/11**

(84) Designated Contracting States :
**DE ES FR GB**

(56) References cited :
**EP-A- 0 142 421**
**DE-B- 1 231 071**
**DE-U- 8 702 576**
**FR-A- 2 596 540**
**GB-A- 1 238 636**

(73) Proprietor : **BABCOCK INDUSTRIES INC.**
**26500 Haggerty Road P.O. Box 2416**
**Farmington Hills Michigan 48333-2416 (US)**

(72) Inventor : **Jaksic, Miroslav**
**5358 Monroe Street 4**
**Toledo Ohio, 43623 (US)**

(74) Representative : **Lewis, David Overington**
**Babcock International plc 217 Tabard Street**
**London SE1 4UR (GB)**

EP 0 311 346 B1

Jouve, 18, rue Saint-Denis, 75001 PARIS

## Description

This invention relates to parking brake assemblies and arose from a consideration of the problems that have been experienced with the connection to the assembly of the cable by which the parking brake is operated.

In GB-A-1 238 636 and DE-B-1 231 071 there is disclosed a parking brake assembly including a parking brake lever pivotably mounted on one of a pair of brake shoes in turn pivotably mounted on a backing plate, a cable connector formed on the lever at a location remote from the axis about which the lever is pivoted, and a flexible cable extending through an opening in the backing plate and provided at its leading end with an enlargement that is associated with the connector, the connector being provided with opposed walls separated by a first space permitting the passage between the walls of the enlargement.

Due to the difficulty of connecting the cable to the lever when an associated brake drum is in place, it has been the practice to connect the cable to the lever before the brake drum is placed in position. The conduit is connected to the backing plate and the cable is engaged with the parking brake lever by the engagement of the enlargement on the end of the cable with the connector on the lever. Since the cable must be long enough to reach to the brake actuator, it must be wrapped about an associated axle on which the brake assembly is mounted and then unwrapped at the ultimate destination where the axle is assembled to the vehicle. Such a wrapping and unwrapping can damage the cable or possibly case injury to a worker as the cable uncoils from its wrapped position.

By the present invention, the leading end of the flexible cable has a resilience such that on lateral deflection it will tend to return to the condition it occupied before deflection, guide means are provided by which the leading end of the cable fed into the opening will be guided towards the connector and a ramp is disposed between the walls so as to be encountered by the enlargement in sliding the cable to its final position and such that continued movement of the enlargement along the ramp will deflect the adjacent leading end part of the cable from its initial condition, the ramp sloping laterally towards an axially extended further space that forms an extension of the first space and is of a width such as to be able to receive the cable but not the enlargement the arrangement being such that when the enlargement has traversed the length of the ramp the cable straightens to be received in the further space with the enlargement lying beyond the space.

Thus the present invention provides a parking brake assembly such that the cable can be connected to the parking brake lever after the brake assembly, including the brake drum, has been placed in position on the automotive vehicle. By use of the invention the worker assembling the device may not be required to see the interior of the brake assembly.

By way of example embodiments of the invention will now be described with reference to the accompanying drawings in which:-

Figure 1 is a side view of a brake system embodying the invention;

Figure 2 is a front view of what is shown in Figure 1, with the top largely cut away;

Figure 3 is a detail of Figure 2 on an enlarged scale;

Figure 4 is a section on the line IV-Iv of Figure 3;

Figure 5 is a section on the line V-V of Figure 3;

Figure 6 shows what is shown in Figure 3, partly cut away, and also showing the end of a cable that, in use of the brake, is connected to the brake assembly;

Figure 7 is a section on an enlarged scale on the line VII-VII of Figure 2;

Figure 8 is a section taken on the line VIII-VIII of Figure 7;

Figure 9 shows what is shown in Figure 7 before the cable has been inserted;

Figure 10 is a section of a modified form of what is shown in Figure 7; and

Figure 11 shows what is shown in Figure 10 before the cable has been inserted.

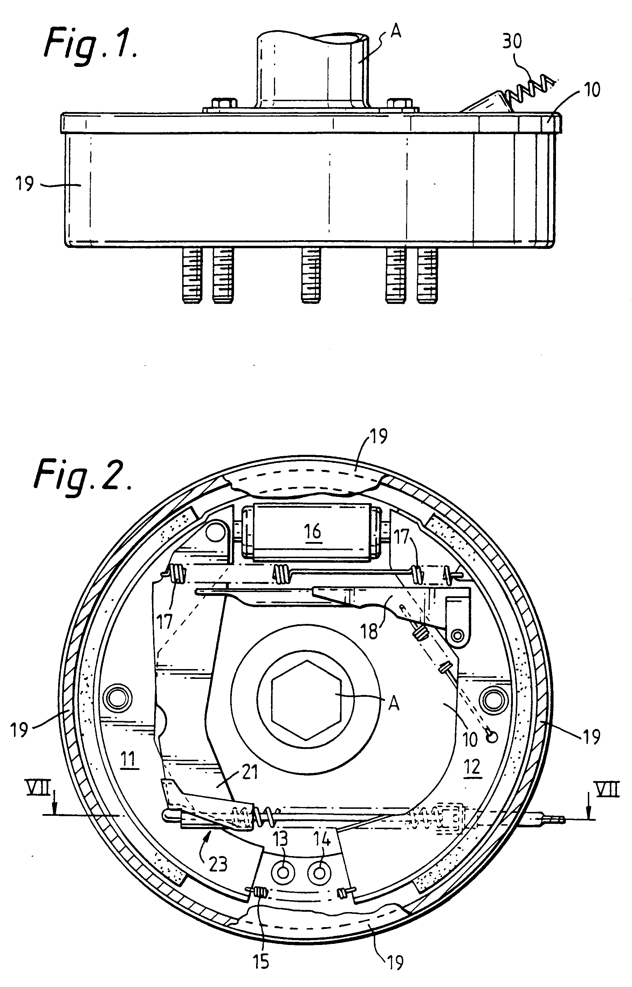

Figures 1 and 2 show a generally conventional brake assembly which includes a backing plate 10 on which brake shoes 11, 12 are each pivoted at one end 13, 14. At that end, the brake shoes are interconnected by a tension spring 15, and a brake cylinder 16 is interposed between their other ends for actuating the brake shoes. A tension spring 17 extends between the other ends of the brake shoes and a self-adjusting mechanism 18 is interposed between the brake shoes for adjusting clearance relative to the drum 19 which covers the brake assembly. The backing plate 10 is mounted on an axle A. What has been described is generally old and well known in the art.

In a way that is also known a parking brake operating lever 21 is pivoted to one end of one of the shoes 11. The lever 21 is connected by a flexible cable 33, reciprocable in a conduit, and connected to a remote actuator such as a foot pedal or a hand-operated lever (not shown).

The lower end 22 of the lever 21 is formed with a wall 23 connected by a curved portion 24, and extending parallel, to the main portion of the lever 21 to define a vertical slot 25 and, above and integral with the slot 25, an enlarged space 26. The portion 24 extends upwardly to the left, as viewed in Figure 2, to define a ramp 27. The upper end of the wall 23 is shaped to provide a portion 28 that overlies the upper end of the ramp 22.

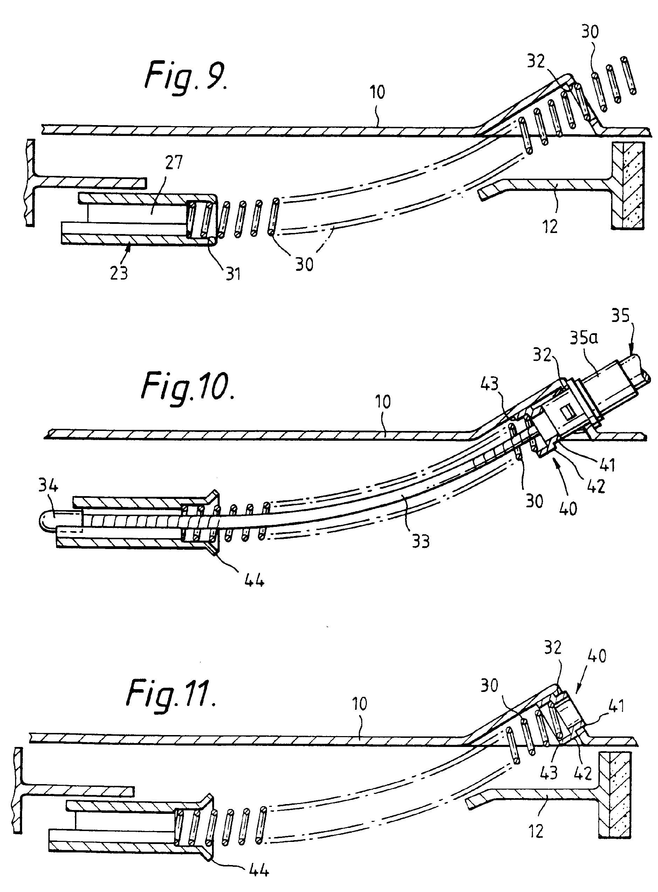

The lower end of the curved portion 24 provides an annular shoulder 29 which is engaged by an end of a coil spring 30. After the coil spring 30 has been placed in position on the shoulder 29, a portion 31 of the shoulder is crimped about the end of the spring 30 to hold it in position. The other end of the coil spring 30, when relaxed, extends through an opening 32 in the backing plate 20 (see Figure 9).

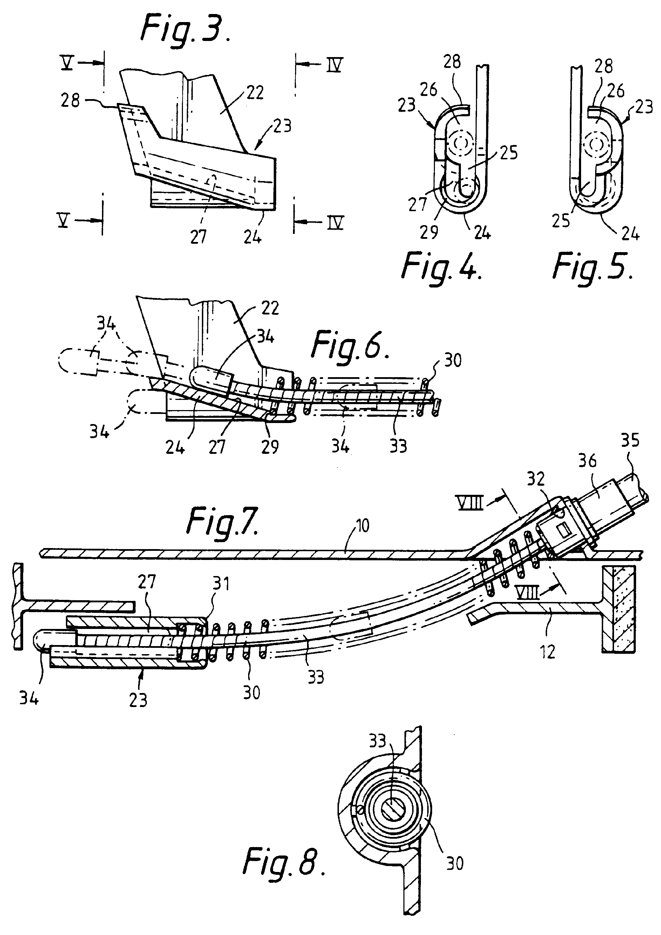

The assembly that has been described is fixed by means of the axle to a vehicle. The flexible inner cable 33 that is reciprocable within a conduit or sleeve 35, is then threaded through the coil spring 30 towards the portion 24. The flexible cable has some degree of stiffness. An enlargement 34 on the end of the cable 33 first engages and then, with further movement, the end of the cable 33 is deflected from its natural path by ramp 27 (Figure 6) until the enlargement 34 passes the end of the ramp 27. In this condition, the natural stiffness of the cable 33 causes the cable 33 to snap down into the narrow slot 25, when the enlargement 34 lies behind, and is restrained by, the end of the portion 24. The portion 28 functions to prevent inadvertent upward movement of the cable 33 during the assembly. The curvature of the brake drum 19 which will be in position at this time, functions to ensure the movement of the cable 33 upwardly and to the left as viewed in Figure 5.

When the enlargement 34 is in position, the conduit 35 is then attached to the backing place 10 by a snap type connector 36. A suitable known connector is described in US-A-2,869,905 and US-A-4,324,503. By the attachment, spring 30 becomes somewhat compressed between the shoulder 29 and the connector 36.

The brake assembly that has been described does not require the cable 33 to be connected to the brake at the time of the assembly of the brake on the axle A and the cable 33 can be connected at the automotive vehicle plant while the brake drum is in place even though the presence of the brake drum prevents viewing the interior of the brake assembly. The connection can be effected without the use of tools and without manual intervention into the brake area.

The modified form of assembly shown in Figures 10 and 11, differs from what has been described essentially in that the spring 30 is provided with a member 40 that engages in the opening 32 so that spring 30 is precompressed during shipment. The member 40 includes a tubular portion 41 that extends from the outside of the plate 10 through opening 32 and flange portion 42 that engages a shoulder surrounding the opening in the backing plate 10 through which spring 32 extends. Member 40 also includes a wall 43 that receives the end of spring 30. Portion 24, that receives the other end of the spring 30, can be provided with an outwardly extending lip 44 for guiding the other end of spring 30 into position during assembly in the brake assembly.

During shipment of the axle and brake assembly, the brake assembly is in the condition shown in Figure 11 with the brake drum in place. After the axle has been assembled to the vehicle, the cable 33 is threaded through the coil 30 and engages in the same manner as in the embodiment previously described. Connector 35a on the conduit 35 is then connected to the backing plate. During this connection, connector 35a moves member 40 as shown in Figure 10, further compressing spring 30.

By use of the present invention, some of the difficulties encountered with previous proposals can be avoided. In such proposals, to avoid connecting the cable, such as is denoted at 35, to the brake assembly after the drum 19 is in position, it has been common to make the connection to the brake lever 21 at the place of manufacture of the brake assemblies when they are mounted on the axle such as the rear axle of a vehicle and before the drum is in place. Inasmuch as the cable is relatively long, since it must be long enough to extend to the brake actuator, it is necessary to wrap the cable about the associated axle on which the brake assembly is mounted and then unwrap the cable at the ultimate destination where the axle is assembled to the vehicle. Such a wrapping and unwrapping can damage the cable or possibly cause injury to a worker as the cable uncoils from it wrapped position.

## Claims

1. A parking brake assembly including a parking brake lever (21) pivotably mounted on one of a pair of brake shoes (11,12) in turn pivotably mounted on a backing plate (10), a cable connector (22) formed on the lever at a location remote from the axis about which the lever is pivoted, and a flexible cable (33) extending through an opening (32) in the backing plate (10) and provided at its leading end with an enlargement (34) that is associated with the connector (22), the connector (22) being provided with opposed walls (23) separated by a first space (26) permitting the passage between the walls (23) of the enlargment (34), characterised in that the leading end of the flexible cable (33) has a resilience such that on lateral deflection it will tend to return to the condition it occupied before deflection, guide means (30) are provided by which the leading end of the cable (33), fed into the opening (32), will be guided towards the connector (22), and a ramp (27) is disposed between the walls (23) so as to be encountered by the enlargement (34) in sliding the cable (33) to its final position and such that continued movement of the enlargement (34) along the ramp (27) will deflect the adjacent leading end part of the cable from its initial condition, the ramp (27) sloping laterally towards an axially extended further space (25) that forms an extension of the first space (26) and is of a width such as to be able to receive the cable (33) but not the enlargement (34), the arrangement being such that when the enlargement (34) has traversed the length of the ramp (27), the cable (33) straightens to be received in the further space (25) with the enlargement (34) lying beyond the space (25).

2. A parking brake as claimed in Claim 1, characterised in that the walls (23) are so shaped relatively to each other that the ends most remote from the ramp are separated by a distance such that the cable cannot escape between the ends.

3. A parking brake as claimed in Claim 1 or Claim 2, characterised in that the guide means (30) comprises a helical spring (30) under compression of which one end abuts the connector (22) and the other end is secured at the opening in the backing plate (10).

**Patentansprüche**

1. Parkbremsanordnung mit folgenden Merkmalen: ein Parkbremshebel (21) ist auf einem Bremsschuh eines Paars von Bremsschuhen (11, 12) schwenkbar gelagert, die wiederum auf einer Bremsplatte (10) schwenkbar montiert sind; der Hebel ist an einer Stelle entfernt von der Hebelschwenkachse Kabelverbinder (22) ausgebildet ; ein biegsames Seil (33) erstreckt sich durch eine Öffnung (32) in der Bremsplatte (10) und ist an seinem vorderen Ende mit einer Verdickung (34) versehen, die dem Verbinder (22) zugeordnet ist; der Verbinder (22) ist mit sich gegenüberstehenden Wandungen (23) versehen, die durch einen ersten Raum (26) voneinander getrennt sind, der den Durchgang der Verdickung (34) zwischen den Wandugen (23) ermöglicht; dadurch gekennzeichnet, daß das vordere Ende des biegsamen Seils (33) eine solche federnde Nachgiebigkeit hat, daß es bei seitlicher Abbiegung in die Lage zurückzukehren bestrebt ist, die sie vor der Abbiegung eingenommen hat, daß Führungseinrichtung (30) vorgesehen sind, durch welche das vordere Ende des Seils (33), in die Öffnung (32) hineingeführt, zu dem Verbinder (22) geführt wird, daß eine Schrägfläche (27) zwischen den Wandungen (23) so angeordnet ist, daß die Verdickung (34) beim Gleiten des Seils (33) in die Endlage auf die Schrägfläche auftrifft und daß fortgesetzte Bewegung der Verdickung (34) entlang der Schrägfläche (27) das benachbarte vordere Ende des Seils aus der ursprünglichen Stellung auslenkt, daß die Schrägfläche (27) seitlich in einen sich axial erstreckenden weiteren Raum (25) überleitet, der eine Fortsetzung des erstens Raums (26) bildet und eine solche Breite aufweist, daß er das Seil (33), jedoch nicht die Verdickung (34) aufnehmen kann, und daß die Anordnung so getroffen ist, daß, wenn die Verdickung (34) die Länge der Schrägfläche (27) durchquert hat, das Seil (33) in seine gerade Form rückkehrt und in dem weiteren Raum (25) aufgenommen wird, wobei die Verdickung (34) jenseits des Raums (25) zu liegen kommt.

2. Parkbremse nach Anspruch 1, dadurch gekennzeichnet, daß die Wandungen (23) so relativ zueinander geformt sind, daß die von der Schrägfläche am weitesten entfernten Enden um einen solchen Abstand voneinander entfernt sind, daß das Seil nicht zwischen den Enden entschlüpfen kann.

3. Parkbremse nach Anspruch 1 oder 2, dadurch gekennzeichnet, daß die Führungseinrichtung (30) eine Schraubenfeder (30) umfaßt, unter deren Druck ein Ende am Verbinder (22) anliegt und das andere Ende in der Öffnung der Bremsplatte (10) festgehalten wird.

**Revendications**

1. Ensemble de frein de stationnement comprenant un levier (21) de frein de stationnement monté de manière à pivoter sur un segment d'une paire de segments de frein (11, 12) montés à leur tour de manière à pivoter sur une plaque de support (10), un raccord de câble (22) formé sur le levier à un emplacement éloigné de l'axe selon lequel le levier est pivoté, et un câble flexible (33) s'étendant par une ouverture (32) dans la plaque de support (10) et doté à son extrémité antérieure d'un élargissement (34) qui est associé au raccord (22), le raccord (22) étant doté de parois opposées (23) séparées par un premier espace (26) permettant le passage entre les parois (23) de l'élargissement (34), caractérisé en ce que l'extrémité antérieure du câble flexible (33) a une élasticité telle que lors d'un fléchissement latéral, elle a tendance à retourner à l'état qu'elle occupait avant le fléchissement, un moyen de guidage (30) est prévu par lequel l'extrémité antérieure du câble (33), introduite dans l'ouverture (32), est guidée vers le raccord (22), et une rampe (27) est disposée entre les parois (23) de manière à être rencontrée par l'élargissement (34) lors du glissement du câble (33) jusqu'à sa position finale et de manière que la poursuite du déplacement de l'élargissement (34) le long de la rampe (27) fléchisse la partie d'extrémité antérieure adjacente du câble depuis sa condition initiale, la rampe (27) étant inclinée latéralement vers un autre espace (29) s'étendant axialement, qui forme une extension du premier espace (26) et a une largeur de manière à pouvoir recevoir le câble (33) mais pas l'élargissement (34), l'agencement étant tel que lorsque l'élargissement (34) a traversé la longeur de la rampe (27), le câble (33) se redresse pour être reçu dans l'autre espace (25) avec l'élargissement (34) se trouvant au-delà de l'espace (25).

2. Frein de stationnement selon la revendication 1, caractérisé en ce que les parois (23) ont une forme telle l'une par rapport à l'autre que les extrémités les plus éloignées de la rampe sont séparées d'une distance telle que le câble ne peut s'échapper entre les extrémités.

3. Frein de stationnement selon la revendication 1 ou 2, caractérisé en ce que le moyen de guidage (30) comprend un ressort hélicoïdal (30) sous compression duquel une extrémité bute contre le raccord (22) et l'autre extrémité est fixée à l'ouverture dans la plaque de support (10).

Fig.1.

Fig.2.

Fig. 3.

Fig. 4.

Fig. 5.

Fig. 6.

Fig. 7.

Fig. 8.

*Fig. 9.*

*Fig. 10.*

*Fig. 11.*